(19) **Europäisches Patentamt**
**European Patent Office**
**Office européen des brevets**

(11) **EP 2 815 492 B1**

(12) **EUROPEAN PATENT SPECIFICATION**

(45) Date of publication and mention
of the grant of the patent:
**13.04.2016 Bulletin 2016/15**

(51) Int Cl.:
*H02M 1/15* *(2006.01)*      *H02M 3/28* *(2006.01)*
*H05B 33/08* *(2006.01)*

(21) Application number: **13705744.4**

(22) Date of filing: **07.02.2013**

(86) International application number:
**PCT/EP2013/052483**

(87) International publication number:
**WO 2013/120768 (22.08.2013 Gazette 2013/34)**

(54) **LOAD DRIVER AND METHOD FOR REDUCING THE OUTPUT RIPPLE CURRENT OF A LOAD DRIVER**

LASTTREIBER UND VERFAHREN ZUR VERRINGERUNG DES AUSGANGSWELLIGKEITSSTROMS EINES LASTTREIBERS

PILOTE DE CHARGE ET PROCÉDÉ DE RÉDUCTION DE L'ONDULATION DU COURANT DE SORTIE D'UN PILOTE DE CHARGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2012 CN 201210034241**

(43) Date of publication of application:
**24.12.2014 Bulletin 2014/52**

(73) Proprietor: **OSRAM GmbH**
**80807 München (DE)**

(72) Inventors:
• **WEI, Zeke**
**Shenzhen, Guangdong 518053 (CN)**
• **MENEGAZZI, Michele**
**31038 Paese (IT)**
• **ZHANG, Quan**
**Shenzhen, Guangdong 518053 (CN)**
• **ZHANG, Yuping**
**Shenzhen, Guangdong 518053 (CN)**

(56) References cited:
**US-A- 5 929 692**      **US-A1- 2011 051 475**

**Description**

**FIELD OF THE INVENTION**

The present invention generally relates to a load driver. More particularly, the present invention relates to a load driver with reduced output ripple current. The present invention further relates to a method for reducing an output ripple current of a load driver.

**BACKGROUND OF THE INVENTION**

As for a direct current (DC) powered load, the amplitude of the ripple current of the power supply may produce great effect on the operating state of the load and the efficiency of the power supply. It has been a focus of the research how to reduce the output ripple current of the load driver. Particularly, light emitting diode (LED), a novel and environmental protection light source for illumination which is DC driven, has been widely used. LED has several advantages, such as being energy saving, environmental protecting and with long lifespan, etc. However, it typically requires a driver capable of outputting DC to ensure the normal operation, since the LED is DC powered, which is different from the traditional incandescent lamp powered by alternating current (AC). Therefore, the development of a driver of high performance and miniaturization becomes an important task in the field.

US 2011 051 475 A1 discloses a regulator circuitry for reducing the ripple from a power transformer. The circuitry uses an amplifier to amplify the ripple and an reverse amplifier to reverse the ripple to superimpose it to the original ripple.

US 5 929 692 A discloses a switch mode voltage regulator with synchronous rectification with an auxiliary step-down regulator that produces an output ripple cancellation current that is equal but opposite to the output ripple of the main regulator.

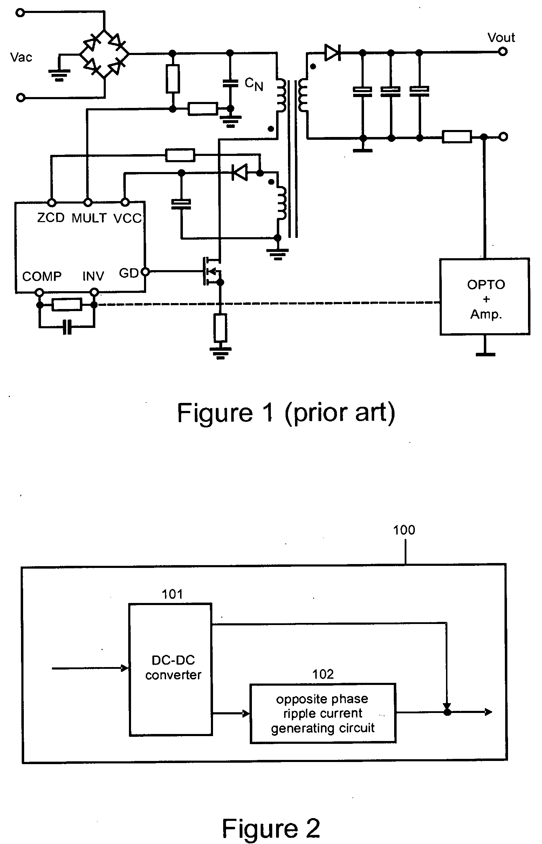

A Power Factor Correction (PFC) circuit can be used to improve the power factor (PF), to meet the practical application criteria (for example, "Energy Star" of U.S., the application requirement for business and home illumination). Single stage of PFC + Flyback circuit is the chip and popular solution for the LED driver, as shown in Fig. 1. Such a circuit can achieve high PF and high efficiency only with single stage. Compared with the traditional two stage PFC circuit, it has the advantages of simpler topology and lower cost. However, one biggest disadvantage is that the output ripple current is very big, and large capacitance of electrolytic capacitor (E-CAP) is normally required to reduce the ripple. Otherwise, a problem may happen in some application. For example, in indoor application, big ripple current is easily caught by camera although human eyes may not feel the light blinking, since the ripple current has a frequency of twice that of the main input. However, the E-CAP is generally large sized, and thus it is a challenge to accommodate several large sized capacitor, especially for a limited sized LED driver.

**SUMMARY OF THE INVENTION**

The present invention is made in view of the above. It is to be noted that, although the present invention is proposed with respect to the above problem, those skilled in the art shall understand, the load driver and the method for reducing the output ripple current of a load driver proposed herein are not limited to being applied in conjunction with the LED, but can be appropriately applied to any other load or in any other situation with similar requirement. Likewise, those skilled in the art shall understand, the present invention is not limited to be applied to single stage of PFC + flyback circuit.

Specifically, the present invention aims to provide a load driver with reduced output ripple current according to claim 1, and a method for reducing an output ripple current of a load driven according to claim 13.

According to an aspect of the present invention, a load driver is provided, including: a DC-DC converter, which has a first output and a second output; an opposite phase ripple current generating circuit, which is connected to the second output and configured to generate a second current, with a phase of a ripple current being opposite to a phase of a ripple current of a first current from the first output, wherein the first current and the second current are combined into an output current to drive the load.

According to another aspect of the present invention, a method for reducing an output ripple current of a load driver is provided, characterized in: generating a first current; generating a second current with a phase of a ripple current being opposite to a phase of a ripple current of the first current, using an opposite phase ripple current generating circuit; and combining the first current and the second current into an output current to drive the load.

These and other advantages of the invention will become more apparent from the following detailed description of the embodiments thereof with reference to the drawings.

## BRIEF DESCRIPTION OF THE DRAWINGS

The embodiments of the invention will be described in detail with reference to the drawings below, to further set forth the above and other advantages and features of the invention. The drawings together with the following description are contained in the Description and form a part thereof. It is to be understood that, the drawings just illustrate typical examples of the invention, and should not be considered as a limitation to the scope of the invention. Among the drawings:

Fig. 1 is a circuit diagram of a LED driver adopting single stage of PFC + Flyback circuit according to the prior art;

Fig. 2 is a block diagram illustrating the configuration of a load driver according an embodiment of the invention;

Fig. 3 is a block diagram illustrating the configuration of an opposite phase ripple current generating circuit according to an embodiment of the invention;

Fig. 4 is a circuit diagram of a LED driver according to an embodiment of the invention;

Fig. 5 shows the waveform of the output ripple current in a case of driving a LED with the load driver of Fig. 4;

Fig. 6 shows the waveform of the output ripple current in a case of driving a LED with the load driver of Fig. 1; and

Fig. 7 is a circuit diagram of an opposite phase ripple current generating circuit according to another embodiment of the invention.

## DETAILED DESCRIPTION OF THE INVENTION

Exemplary embodiments of the present invention will be described hereinafter in connection with the accompanying drawings. To facilitate explanation, a LED is used as the load, and the LED is driven by single stage of PFC + Flyback driver in the described exemplary embodiments. However, it is to be understood that the embodiments described here are only for the purpose of illustration but not limitation in any way. The load and the driver configuration the invention can be applied to are not limited to these. The scope of the invention is uniquely defined by the appended Claims and the equivalent thereof.

Firstly, with reference to Fig. 2, a load driver 100 according to an embodiment of the invention includes a DC-DC converter 101 and an opposite phase ripple current generating circuit 102. The DC-DC converter 101 receives the rectified power source input, and converts the same to the required voltage and current level. The DC-DC converter 101 has a first output and a second output, wherein the first output outputs a first current, and the second output is connected to the opposite phase ripple current generating circuit 102 to power the same. The opposite phase ripple current generating circuit 102 is configured to generate a second current. The phase of the ripple current of the second current is opposite to that of the ripple current of the first current, so that the ripple current of the output current obtained by combining the first current and the second current is reduced due to cancelling with each other. The output current with reduced ripple current is used to drive the load.

In Fig. 2, various types of DC-DC converter, such as the forward converter, the flyback converter, and the like, can be used according to the occasion the invention is applied. The parameters of the DC-DC converter adopted are also determined according to the specific application. Considering this is not related to the subject matter of the invention, we will not give further discussion here.

In addition, the load driver 100 of Fig. 2 can be used to drive all kinds of loads, particularly, all kinds of constant current devices, such as a LED.

In an embodiment of the invention, the first output and the second output of the DC-DC converter 101 are grounded through a first capacitor and a second capacitor for filtering, respectively. Particularly, the first capacitor is an E-CAP, while the second capacitor can be an ordinary capacitor with quite small capacitance.

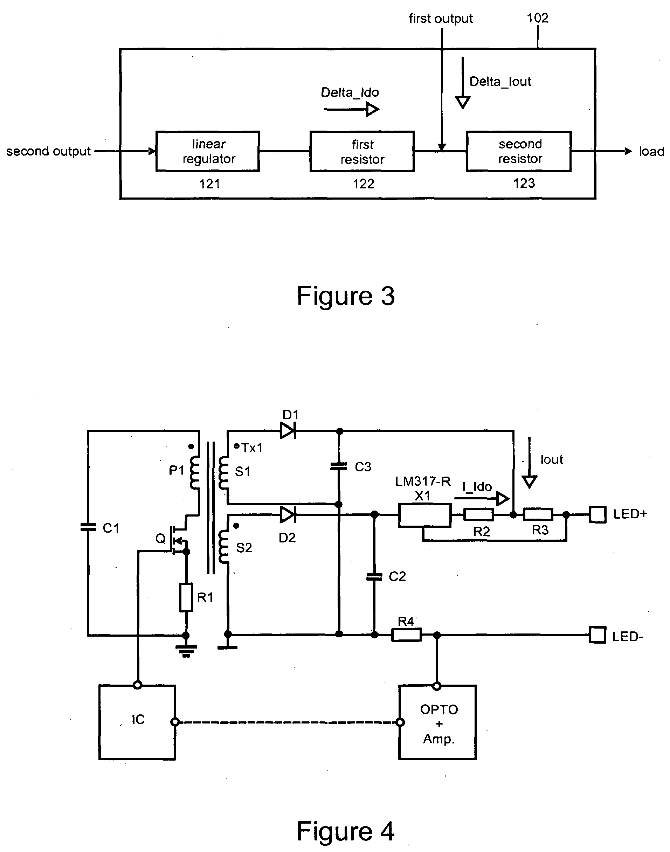

The opposite phase ripple current generating circuit 102 in Fig.2 can be configured to include integrated circuit (IC) chip, discrete resistor, discrete capacitor and so on. The configuration of the opposite phase ripple current generating circuit according to an embodiment of the invention will be described below with reference to Fig. 3.

In Fig. 3, the opposite phase ripple current generating circuit 102 is configured to include a linear regulator 121, a first resistor 122 and a second resistor 123. The linear regulator 121 is configured to maintain the voltage drop on the first resistor 122 and the second resistor 123 to be constant. The output of the linear regulator 121 is coupled to the first output, and the input thereof is coupled to the second output.

It should be noted that, "couple" used here is defined as a direct connection of two or more circuit objects without any other circuit objects inserted therebetween, and an indirect connection of two or more circuit objects achieved by one or more circuit objects inserted therebetween. For example, two circuit objects connected directly to each other are referred to be "coupled" to each other. Likewise, if one or more circuit objects are connected between the two circuit objects, the two circuit objects are also referred to be "coupled" to each other.

Specifically, the two ends of the first resistor 122 are connected to the output of the linear regulator 121 and the first output, respectively. The two ends of the second resistor 123 are connected to the first output and the load, respectively. It is explained in detail in the following how the opposite phase ripple current is generated, with reference to Fig. 3.

As shown in Fig. 3, it is assumed the ripple current of the first current from the first output is denoted as Delta_Iout, and the ripple current of the current generated by the opposite phase ripple current generating circuit 102 is denoted as Delta_Ido. Since the linear regulator 121 is configured to maintain the voltage drop on the first resistor 122 and the second resistor 123 to be constant, that is, the fluctuation of voltage can be neglected, the ripple current Delta_Iout of the first current and the ripple current Delta_Ido of the current generated by the opposite phase ripple current generating circuit meet the following equation (1) :

$$(\text{Delta\_Iout} + \text{Delta\_Ido}) \times R3 + \text{Delta\_Ido} \times R2 = 0 \qquad (1)$$

Wherein, R2 is the resistance value of the first resistor 122, and R3 is the resistance value of the second resistor 123. The following equation (2) can be obtained by a simple linear transformation of the above equation:

$$\text{Delta\_Iout} / \text{Delta\_Ido} = -(R2 + R3) / R3 \qquad (2)$$

It can be seen from the equation (2) that, the ripple current Delta_Ido of the current generated by the opposite phase ripple current generating circuit 102 has a phase being opposite to that of the ripple current Delta_Iout of the first current. Therefore, the combined output current to the load has a reduced ripple current, due to the ripple current cancelling of each other.

It can also be seen from equation (2) that, the ratio of the resistance of the first resistor 122 to that of the second resistor 123 determines the amplitude of the ripple current of the output current. In the practical application, their resistance can be determined according to the load required amplitude of the ripple current and the power source efficiency.

In addition, the linear regulator 121 can be configured with all kinds of linear regulator chips available, such as LM 317, LT 3085, UTC 317 or the like. The liner regulator 121 and the resistors 122, 123 can be surface mounted device (SMD), or double in-line packaged.

In an embodiment of the invention, LM 317 is used to configure the opposite phase ripple current generating circuit 102 and a LED is used as the load, as shown in Fig. 4. It is to be understood that, the circuit configuration shown in Fig. 4 is just a specific example of, but not a limitation to the invention.

The LED driver shown in Fig. 4 includes a PFC circuit, a flyback converter and an opposite phase ripple current generating circuit. The configuration of the PFC circuit is shown roughly, in order not to unnecessarily obscure the substance of the present invention, wherein the IC can be any available circuit or module capable of performing power factor correction, such as the chip L 6561 of STMicroelectronics (ST) shown in Fig. 1, TPS 92210 of Texas Instruments (TI), UCC 28810 and UCC 28811 of TI, etc. This is known in the art, and thus is not described in detail here.

The PFC circuit and the flyback converter circuit share one single Metal-Oxide-Semiconductor Field-Effect Transistor (MOSFET) Q1, configuring a LED driver with single stage of PFC + flyback. As shown in Fig. 4, there is also a constant current feedback circuit (OPTO+Amp) coupled to the PFC circuit, for feeding the current output to the LED through a resistor R4 back to the PFC circuit, to control the on-off state of the MOSFET Q1, so that high PF can be achieved.

The flyback converter circuit has a transformer, with S1 (main winding) and S2 (secondary winding) two windings on the secondary side thereof. The opposite phase ripple current generating circuit and the secondary winding configure linear circuit, generating a ripple current opposite to that of the main winding in phase, so that the object of reducing the ripple current output to the LED can be achieved.

Specifically, the taps from the dotted terminals of the main winding S1 and the secondary winding S2 are coupled to the first output and the second output through the forward connected diodes D1 and D2, respectively. The first output and the second output are grounded through the capacitors C3 and C2, respectively.

The opposite phase ripple current generating circuit uses a three terminal adjustable regulator LM 317 as the linear regulator 121. The input of the LM 317 is connected to the second output, the output thereof is connected to the first resistor R2 and the voltage adjusting end thereof is connected to the second resistor R3 and the load. LM 317 is configured to maintain the voltage drop on the first resistor R2 and the second resistor R3 to be 1.2 V. The output ripple current to the LED can be reduced, based on the equations (1) and (2).

Theoretically, the number of turns of the secondary winding S2 is larger than that of the main winding S1, to ensure enough voltage difference being provided to the linear regulator LM 317.

In addition, it is to be noted that the load is not limited to the LED adopted here, but can be, for example, any constant current device.

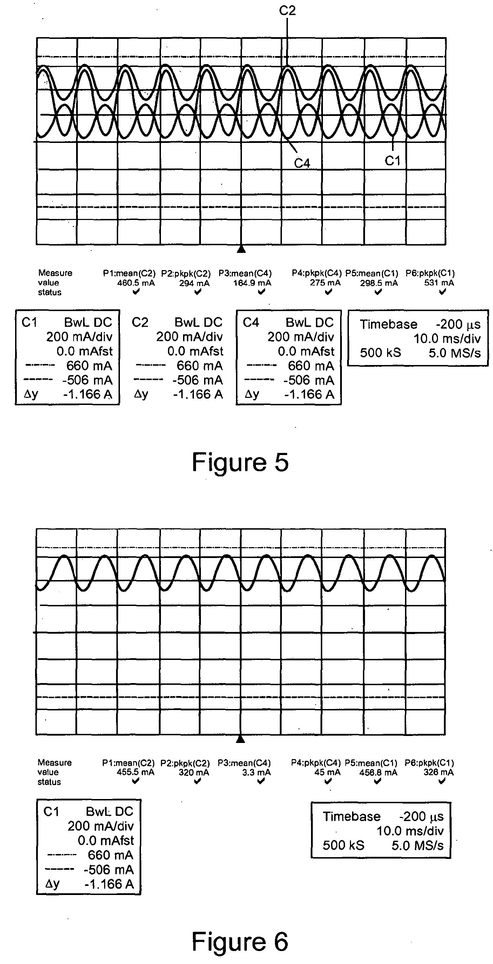

Fig. 5 shows the waveform of the output ripple current in a case of driving a LED with the load driver of Fig. 4. The nominal power of the LED is 15W, and the output current of the driver is 450 mA. In Fig. 5, C1 represents the current from the main winding S1, C2 represents the current output to the LED, and C4 represents the output current from the linear regulator. As can be seen, the ripple current of C2 is 294 mA, which is much smaller than the ripple current of C1, 531 mA. In other words, the ripple current of the output current to the LED is reduced, by employing the LED driver of Fig. 4. In this embodiment, only one E-CAP C3 with capacitance of 680 $\mu$F and nominal voltage of 35 V is used, while the capacitance of the capacitor C2 can be quite small.

As a contrast, Fig. 6 shows the waveform of the output ripple current in a case of driving a LED with the load driver of Fig. 1, wherein two E-CAPs each with capacitance of 1000 $\mu$F (the nominal voltage for each is 35V) are used. As can be seen, the ripple current of the output current obtained with this solution is 326 mA.

In both solutions, the amplitudes of the ripple current of the output current are approximate to each other. However, the LED driver according to an embodiment of the invention only requires less E-CAPs with smaller capacitance, so that the space occupied by the E-CAPs can be saved while reducing the output ripple current. Further, the cost of the LED driver can be lowered by using less E-CAPs on the output side.

In addition, as mentioned above, the linear regulator LM 317 in Fig. 4 can be substituted with other linear regulators, such as UTC 317.

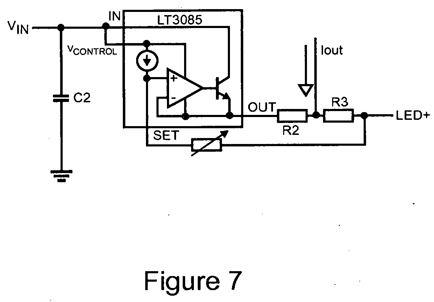

As an alternative, Fig. 7 shows a circuit diagram of an opposite phase ripple current generating circuit according to another embodiment of the invention. In this circuit, LT 3085 produced by the Linear Technology corporation is used as the linear regulator 121. As shown in Fig. 7, the IN pin together with the $V_{CONTROL}$ pin of the LT 3085, is connected to the second output, the OUT pin is connected to the first resistor R2, and the SET pin is connected to the LED through a variable resistor. Similarly, the voltage drop on the first resistor R2 and the second resistor R3 is kept to be constant, by means of the characteristics of the linear regulator LT 3085, so that the ripple current of the output current can be reduced by the opposite phase ripple current.

Although the present invention has been described in the foregoing with reference to the specific embodiments thereof, it should be understood that these embodiments are only illustrativze but not lumitative. Various modifications and variations can be made by those skilled in the art, without departing the scope of the invention. The scope of the invention is uniquely defined by the appended Claims and the equivalents thereof.

## Claims

1. A load driver (100), comprising:

   a DC-DC converter (101), which has a first output and a second output;
   an opposite phase ripple current generating circuit (102), which is connected to the second output and configured to generate a second current, with a phase of a ripple current being opposite to a phase of a ripple current of a first current from the first output, wherein,
   the first current and the second current are combined into an output current to drive the load,
   wherein, the opposite phase ripple current generating circuit (102) comprises a linear regulator (121), an output of the linear regulator being coupled to the first output, and an input of the linear regulator being coupled to the second output, the load driver being **characterised in that** the opposite phase ripple current generating circuit (102) further comprises a first resistor (122) and a second resistor (123), and the linear regulator (121) is configured to maintain a voltage drop on the series connection of the first resistor (122) and the second resistor (123) to be constant; and
   the two ends of the first resistor (122) are connected to the output of the linear regulator (121) and the first output respectively, and the two ends of the second resistor (123) are connected to the first output and the load output respectively.

2. The load driver according to claim 1, wherein,
   the resistance of the first resistor and the resistance of the second resistor are determined according to a required amplitude of the ripple current.

3. The load driver according to claim 1, wherein,

the first output and the second output are grounded through a first capacitor and a second capacitor, respectively.

4. The load driver according to claim 3, wherein the first capacitor is an electrolytic capacitor.

5. The load driver according to claim 1, wherein the DC-DC converter is a flyback converter.

6. An arrangement comprising the load driver according to claim 1 and a load, wherein the load is a constant current device.

7. The arrangement according to claim 6, wherein the load is a light emitting diode.

8. The load driver according to any one of claims 1 or 2, wherein,
circuit elements of the opposite phase ripple current generating circuit are surface mounted devices.

9. The load driver according to any one of claims 1 or 2, further comprising a power factor correction circuit, which is connected before the DC-DC converter.

10. The load driver according to claim 9, further comprising a constant current feedback circuit, for feeding the output current to the load back to the power factor correction circuit.

11. A method for reducing an output ripple current of a load driver according to claim 1, **characterized in**:

generating a first current;
generating a second current with a phase of a ripple current being opposite to a phase of a ripple current of the first current, using an opposite phase ripple current generating circuit;
combining the first current and the second current into an output current to drive the load.

12. The method according to claim 11, wherein the load is a constant current device.

13. The method according to claim 12, wherein the load is a light emitting diode.

14. The method according to any one of claims 11 to 13, wherein,
circuit elements of the opposite phase ripple current generating circuit are surface mounted devices.

**Patentansprüche**

1. Lasttreiber (100), umfassend:

einen Gleichstrom-Gleichstrom- (DC-DC-) Wandler (101), der einen ersten Ausgang und einen zweiten Ausgang besitzt;
eine Erzeugungsschaltung für einen gegenphasigen Welligkeitsstrom (102), die mit dem zweiten Ausgang verbunden ist und dafür ausgelegt ist, einen zweiten Strom mit einer Phase eines Welligkeitsstroms zu erzeugen, die einer Phase eines Welligkeitsstroms eines ersten Stroms vom ersten Ausgang entgegengesetzt ist, wobei der erste Strom und der zweite Strom zu einem Ausgangsstrom zum Treiben der Last kombiniert werden; wobei die Erzeugungsschaltung für einen gegenphasigen Welligkeitsstrom (102) einen linearen Regler (121) umfasst und ein Ausgang des linearen Reglers mit dem ersten Ausgang verbunden ist und ein Eingang des linearen Reglers mit dem zweiten Ausgang verbunden ist, wobei der Lasttreiber **dadurch gekennzeichnet ist, dass** die Erzeugungsschaltung für einen gegenphasigen Welligkeitsstrom (102) ferner einen ersten Widerstand (122) und einen zweiten Widerstand (123) umfasst, und dass der lineare Regler (121) dafür ausgelegt ist, einen Spannungsabfall auf der Reihenschaltung aus dem ersten Widerstand (122) und dem zweiten Widerstand (123) konstant zu halten; und
die beiden Enden des ersten Widerstands (122) mit dem Ausgang des linearen Reglers (121) bzw. dem ersten Ausgang verbunden sind, und die beiden Enden des zweiten Widerstands (123) mit dem ersten Ausgang bzw. dem Lastausgang verbunden sind.

2. Lasttreiber gemäß Anspruch 1, wobei
der Widerstandswert des ersten Widerstands und der Widerstandswert des zweiten Widerstands gemäß einer geforderten Amplitude des Welligkeitsstroms bestimmt werden.

3. Lasttreiber gemäß Anspruch 1, wobei
der erste Ausgang und der zweite Ausgang über einen ersten Kondensator bzw. einen zweiten Kondensator geerdet sind.

4. Lasttreiber gemäß Anspruch 3, wobei der erste Kondensator ein Elektrolytkondensator ist.

5. Lasttreiber gemäß Anspruch 1, wobei der DC-DC-Wandler ein Sperrwandler ist.

6. Anordnung, die den Lasttreiber gemäß Anspruch 1 sowie eine Last umfasst, wobei die Last eine Konstantstromvorrichtung ist.

7. Anordnung gemäß Anspruch 6, wobei die Last eine Leuchtdiode ist.

8. Lasttreiber gemäß einem der Ansprüche 1 oder 2, wobei
Schaltungselemente der Erzeugungsschaltung für einen gegenphasigen Welligkeitsstrom oberflächenmontierte Bauelemente sind.

9. Lasttreiber gemäß einem der Ansprüche 1 oder 2, der ferner eine Leistungsfaktorkorrektur-Schaltung umfasst, welche dem DC-DC-Wandler vorgeschaltet ist.

10. Lasttreiber gemäß Anspruch 9, der ferner eine Konstantstrom-Rückkopplungsschaltung umfasst, um den Ausgangsstrom zur Last an die Leistungsfaktorkorrektur-Schaltung zurückzukoppeln.

11. Verfahren zur Verringerung des Ausgangswelligkeitsstroms eines Lasttreibers gemäß Anspruch 1, **gekennzeichnet durch**:

   Erzeugen eines ersten Stroms;
   Erzeugen eines zweiten Stroms mit einer Phase eines Welligkeitsstroms, die einer Phase eines Welligkeitsstroms des ersten Stroms entgegengesetzt ist, mithilfe einer Erzeugungsschaltung für einen gegenphasigen Welligkeitsstrom;
   Kombinieren des ersten Stroms und des zweiten Stroms zu einem Ausgangsstrom zum Treiben der Last.

12. Verfahren gemäß Anspruch 11, wobei die Last eine Konstantstromvorrichtung ist.

13. Verfahren gemäß Anspruch 12, wobei die Last eine Leuchtdiode ist.

14. Verfahren gemäß einem der Ansprüche 11 bis 13, wobei Schaltungselemente der Erzeugungsschaltung für einen gegenphasigen Welligkeitsstrom oberflächenmontierte Bauelemente sind.

**Revendications**

1. Un pilote de charge (100), comprenant :

   un convertisseur c.c.-c.c. (101) qui possède une première sortie et une deuxième sortie,
   un circuit de génération de courant ondulé en opposition de phase (102), qui est raccordé à la deuxième sortie et configuré de façon à générer un deuxième courant, avec une phase d'un courant ondulé étant opposée à une phase d'un courant ondulé d'un premier courant provenant de la première sortie,
   le premier courant et le deuxième courant étant combinés en un courant de sortie destiné à exciter la charge,
   dans lequel le circuit de génération de courant ondulé en opposition de phase (102) comprend un régulateur linéaire (121), une sortie du régulateur linéaire étant couplée à la première sortie et une entrée du régulateur linéaire étant couplée à la deuxième sortie, le pilote de charge étant **caractérisé en ce que**
   le circuit de génération de courant ondulé en opposition de phase (102) comprend en outre une première résistance (122) et une deuxième résistance (123), et le régulateur linéaire (121) est configuré de façon à maintenir constante une chute de tension sur la connexion série de la première résistance (122) et de la deuxième résistance (123), et

les deux bornes de la première résistance (122) sont raccordées à la sortie du régulateur linéaire (121) et à la première sortie respectivement, et les deux bornes de la deuxième résistance (123) sont raccordées à la première sortie et à la sortie de charge respectivement.

**2.** Le pilote de charge selon la revendication 1, dans lequel,
la résistance de la première résistance et la résistance de la deuxième résistance sont déterminées selon une amplitude requise du courant ondulé.

**3.** Le pilote de charge selon la revendication 1, dans lequel,
la première sortie et la deuxième sortie sont mises à la masse par l'intermédiaire d'un premier condensateur et d'un deuxième condensateur, respectivement.

**4.** Le pilote de charge selon la revendication 3, dans lequel le premier condensateur est un condensateur électrolytique.

**5.** Le pilote de charge selon la revendication 1, dans lequel le convertisseur c.c.-c.c. est un convertisseur à transfert indirect.

**6.** Un agencement comprenant le pilote de charge selon la revendication 1 et une charge, la charge étant un dispositif à courant constant.

**7.** L'agencement selon la revendication 6, dans lequel la charge est une diode électroluminescente.

**8.** Le pilote de charge selon l'une quelconque des revendications 1 ou 2, dans lequel,
des éléments de circuit du circuit de génération de courant ondulé en opposition de phase sont des dispositifs montés en surface.

**9.** Le pilote de charge selon l'une quelconque des revendications 1 ou 2, comprenant en outre un circuit de correction de facteur de puissance qui est raccordé avant le convertisseur c.c.-c.c..

**10.** Le pilote de charge selon la revendication 9, comprenant en outre un circuit de rétroaction à courant constant destiné à renvoyer le courant de sortie vers la charge en retour vers le circuit de correction de facteur de puissance.

**11.** Un procédé de réduction d'un courant de sortie ondulé d'un pilote de charge selon la revendication 1, **caractérisé par** :

la génération d'un premier courant,
la génération d'un deuxième courant avec une phase d'un courant ondulé étant opposée à une phase d'un courant ondulé du premier courant au moyen d'un circuit de génération de courant ondulé en opposition de phase,
la combinaison du premier courant et du deuxième courant en un courant de sortie destiné à exciter la charge.

**12.** Le procédé selon la revendication 11, dans lequel la charge est un dispositif à courant constant.

**13.** Le procédé selon la revendication 12, dans lequel la charge est une diode électroluminescente.

**14.** Le procédé selon l'une quelconque des revendications 11 à 13, dans lequel,
des éléments de circuit du circuit de génération de courant ondulé en opposition de phase sont des dispositifs montés en surface.

Figure 1 (prior art)

Figure 2

Figure 3

Figure 4

C2

C4    C1

| Measure | P1:mean(C2) | P2:pkpk(C2) | P3:mean(C4) | P4:pkpk(C4) | P5:mean(C1) | P6:pkpk(C1) |
|---------|-------------|-------------|-------------|-------------|-------------|-------------|
| value   | 460.5 mA    | 294 mA      | 164.9 mA    | 275 mA      | 298.5 mA    | 531 mA      |
| status  | ✔           | ✔           | ✔           | ✔           | ✔           | ✔           |

| C1    BwL DC | C2    BwL DC | C4    BwL DC | Timebase    -200 µs |
|---|---|---|---|
| 200 mA/div | 200 mA/div | 200 mA/div | 10.0 ms/div |
| 0.0 mAfst | 0.0 mAfst | 0.0 mAfst | 500 kS    5.0 MS/s |
| ──── 660 mA | ──── 660 mA | ──── 660 mA | |
| ───── -506 mA | ───── -506 mA | ───── -506 mA | |
| Δy    -1.166 A | Δy    -1.166 A | Δy    -1.166 A | |

# Figure 5

| Measure | P1:mean(C2) | P2:pkpk(C2) | P3:mean(C4) | P4:pkpk(C4) | P5:mean(C1) | P6:pkpk(C1) |
|---------|-------------|-------------|-------------|-------------|-------------|-------------|
| value   | 455.5 mA    | 320 mA      | 3.3 mA      | 45 mA       | 456.8 mA    | 326 mA      |
| status  | ✔           | ✔           | ✔           | ✔           | ✔           | ✔           |

| C1    BwL DC | Timebase    -200 µs |
|---|---|
| 200 mA/div | 10.0 ms/div |
| 0.0 mAfst | 500 kS    5.0 MS/s |
| ──── 660 mA | |
| ───── -506 mA | |
| Δy    -1.166 A | |

# Figure 6

Figure 7

**EP 2 815 492 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011051475 A1
- US 5929692 A